**Europäisches Patentamt**

(19) **European Patent Office** (11) Numéro de publication: **0 273 810**
**B1**

**Office européen des brevets**

(12) **FASCICULE DE BREVET EUROPEEN**

(45) Date de publication du fascicule du brevet: (51) Int. Cl.⁵: **F16L 59/16**
**08.08.90**

(21) Numéro de dépôt: **87402738.6**

(22) Date de dépôt: **02.12.87**

(54) Enveloppe pour la protection d'un appareil monté sur une canalisation.

(30) Priorité: **03.12.86 FR 8616922**

(43) Date de publication de la demande:
**06.07.88 Bulletin 88/27**

(45) Mention de la délivrance du brevet:
**08.08.90 Bulletin 90/32**

(84) Etats contractants désignés:
**BE CH DE ES IT LI**

(56) Documents cités:
**EP-A- 0 141 986**
**US-A- 3 044 915**
**US-A- 4 112 967**

(73) Titulaire: **SOBANOR Plastiques S.A., 13, rue Soeur**
**Marie-Boitier B.P. 80, F-61600 La Ferte Mace(FR)**

(72) Inventeur: **Nicolas, Jacques, Magny le Désert,**
**F-61600 La Ferte Mace(FR)**
Inventeur: **Menon, Rémy, 9, rue Jean Rostand,**
**F-61600 La Ferte Mace(FR)**

(74) Mandataire: **Netter, André et al, Cabinet NETTER, 40, rue**
**Vignon, F-75009 Paris(FR)**

## Description

L'invention concerne une enveloppe pour la protection contre le gel et contre les chocs d'un appareil monté sur une canalisation, notamment un compteur d'eau, une pompe ou une vanne, placé à l'extérieur ou dans un local non chauffé.

EP-A 0 141 986 décrit une telle enveloppe, comprenant deux cuvettes en matériau thermiquement isolant dont les bords sont munis de vis d'assemblage mutuel permettant d'assembler les cuvettes pour former un logement fermé pour l'appareil. Les cuvettes sont en tôle doublée intérieurement d'une mousse de polyuréthane.

US-A 4 112 967 décrit une enveloppe analogue formée d'un seul élément souple s'enroulant autour de la canalisation et s'assemblant à lui-même bord à bord grâce à des moyens d'assemblage prévus sur ces bords, en formant un logement fermé pour l'appareil.

Le but de l'invention est de réaliser une enveloppe qui assure une protection efficace et soit facile à mettre en place et à retirer.

L'enveloppe selon l'invention comprend deux cuvettes souples en matériau thermiquement isolant dont les bords sont munis de moyens d'assemblage mutuel permettant d'assembler les cuvettes pour former un logement fermé pour l'appareil, et présentant en des endroits appropriés des moyens de serrage autour de la canalisation constitués par des éléments de colliers complémentaires.

De préférence, les moyens d'assemblage sont des bandes s'étendant chacune sur une fraction de la longueur du bord de l'élément correspondant et coopérant entre elles pour assurer un assemblage continu sur leur longueur, et les bandes d'assemlage des deux cuvettes sont propres à être assemblées face contre face.

Les moyens de serrage peuvent être également des bandes propres à être assemblées mutuellement face contre face pour former les colliers.

Avantageusement, les bandes d'assemblage et/ou les bandes de serrage sont propres à être alternativement assemblées par contact et désassemblées par arrachage. Il peut s'agir de bandes présentant des boucles et de bandes présentant des crochets coopérant avec les boucles.

Avantageusement, les parois des cuvettes sont imperméables à l'eau.

Selon un mode de réalisation de l'invention, les cuvettes sont formées d'une multiplicité de couches isolantes superposées et de préférence recouvertes d'une toile imperméable.

Selon une autre caractéristique de l'invention, chaque cuvette est formée d'un fond et d'une paroi latérale assemblés entre eux par couture.

D'autres caractéristiques et avantages de l'invention ressortiront de la description ci-après d'un exemple de réalisation et des dessins annexés dans lesquels :

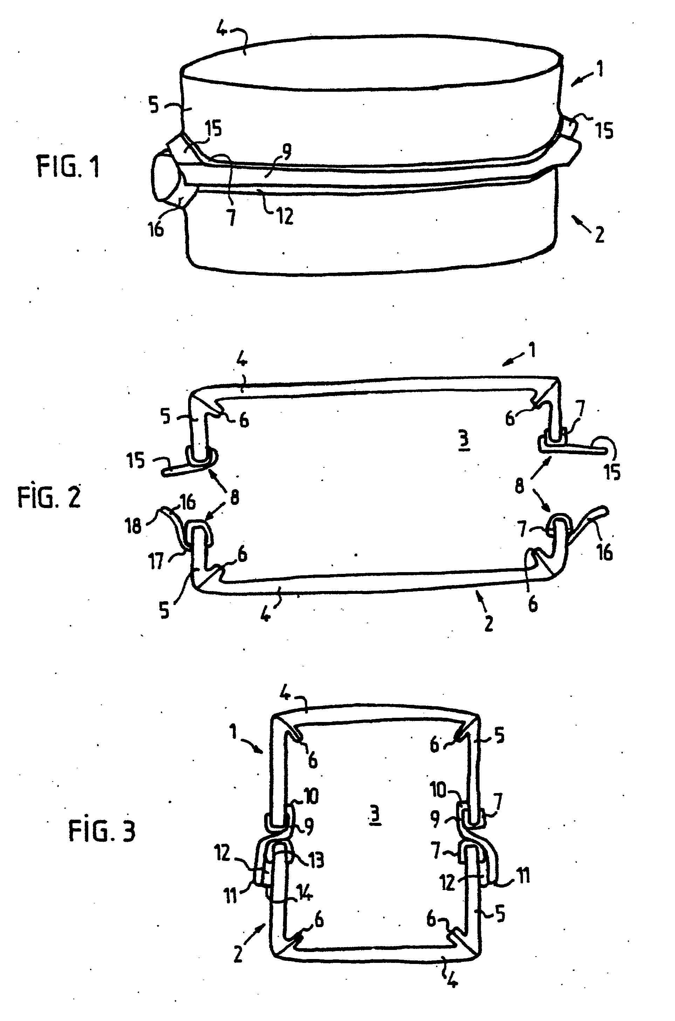

- la figure 1 est une vue en perspective d'une enveloppe assemblée;
- la figure 2 est une vue en coupe longitudinale;
- la figure 3 est une vue en coupe transversale.

L'enveloppe illustrée est destinée à protéger un appareil tel que compteur à eau ou pompe monté sur une canalisation disposée horizontalement. Elle comprend un élément supérieur 1 et un élément inférieur 2 en forme de cuvettes destinés à être assemblés bord à bord comme représenté pour former un logement fermé 3 pour l'appareil à protéger. Les éléments 1 et 2, de dimensions sensiblement identiques, comprennent chacun un fond ovale 4 et une paroi latérale cylindrique 5.

Les parois 4 et 5 des cuvettes sont constituées par un ensemble de couches superposées à fort pouvoir d'isolement thermique, recouvert intérieurement et extérieurement d'une toile synthétique imperméable aux liquides et à la vapeur d'eau.

L'ensemble de couches isolantes est par exemple un sandwich disponible dans le commerce et utilisé dans le bâtiment, comprenant :

- un matelas central de mousse à cellules fermées, transparent au rayonnement infrarouge;

- de part et d'autre de celui-ci, deux matelas de fibres synthétiques thermo-isolantes;

- quatre films miroirs isoréflectifs à haute réflectivité, à base d'aluminium, disposés entre le matelas de mousse et les matelas de fibres et à l'extérieur du sandwich.

La toile imperméable présente par exemple les caractéristiques suivantes :

- contexture :

. 13 fils en chaîne, polyamide 210 deniers,

. 12 fils en trame, polyester 250 deniers,

- épaisseur : 0,22 ± 0,02 mm,

- poids au mètre carré terminé : 340 grammes,

- poids de l'écru au mètre carré : 60 grammes,

- résistance à la rupture sur 5 centimètres :

. chaîne 105 kilogrammes,

. trame 90 kilogrammes,

- résistance à la déchirure :

. chaîne 4,5 kilogrammes

. trame 4,5 kilogrammes,

- enduction PVC sur les deux faces.

Les fonds 4 et les parois latérales 5 sont assemblées en 6 par piqûre dite à plat retourné. Chaque paroi latérale 5 peut être formée par une bande dont les extrémités sont assemblées l'une à l'autre de la même façon. Les bords libres des parois 5 sont renforcés par une bordure en forme de U en polyamide enduite de PVC 7. Ces bords présentent aux extrémités des cuvettes des encoches semi-circulaires 8 permettant le passage de la canalisation non représentée et, le cas échéant, de l'isolant entourant celle-ci.

L'assemblage des bords des cuvettes est réalisé au moyen de bandes d'assemblage s'étendant le long de ceux-ci entre les encoches 8. Le bord de la cuvette supérieure 1 présente des bandes d'assemblage 9 cousues par un de leurs bords latéraux 10, par dessus la bordure 7, sur la face interne de la paroi 5, le bord opposé 11 des bandes 9 étant libre. La cuvette 2 présente, pour coopérer avec les bandes 9, des bandes 12 disposées sur la face externe de la paroi 5, l'un des bords latéraux 13 des bandes 12 étant cousu par dessous le rebord 7 et le bord opposé de la bande 14 étant cousu sur la paroi 5. La face libre des bandes 12 et la face des bandes 9 qui n'est pas en contact avec la bordure 7 de l'élément 1 présente sur toute la longueur de ces bandes des moyens de liaison permettant successivement un assemblage par pression et un désassemblage par arrachage. Ces moyens sont avantageusement constitués par des boucles présentes sur l'une des bandes et des crochets présents sur l'autre bande.

Les bords des encoches 8 sont garnis de bandes 15 et 16 s'étendant selon la périphérie des encoches. Deux bandes 15 de même type que les bandes 9 sont fixées à la cuvette supérieure 1 de la même façon que celles-ci. Deux bandes 16 du même type que les bandes 12 sont fixées à la cuvette inférieure 2, l'un de leurs bords latéraux 17 étant cousu par dessus la bordure 7 sur la face externe de la paroi 5, et l'autre bord 18 étant libre.

Les deux bandes 9 et les deux bandes 15 sont cousues les unes aux autres aux extrémités des encoches pour former une ceinture continue le long du bord de la cuvette 1. De même, les bandes 12 et 16 sont cousues les unes aux autres.

L'enveloppe décrite est mise en place de la façon suivante.

On place la cuvette 1 au-dessus de l'appareil à protéger et la cuvette 2 au-dessous de celui-ci, les bords des cuvettes étant tournés l'un vers l'autre, et on amène ces bords l'un contre l'autre, leurs encoches 8 venant encadrer la canalisation en amont et en aval de l'appareil. Les faces d'assemblage des bandes 9 viennent alors en regard des faces d'assemblage des bandes 13, et il suffit de presser ces bandes face contre face pour réaliser l'assemblage. Les bandes de serrage 15 et 16 situées à une même extrémité de l'enveloppe, ayant une longueur totale supérieure au périmètre de la canalisation éventuellement isolée, peuvent être disposées autour de cette canalisation en se recouvrant partiellement pour assurer un assemblage et un serrage de l'enveloppe autour de la canalisation.

Les bandes 9, 12, 15 et 16 assurent une fermeture pratiquement étanche de l'enveloppe, et un assemblage et un désassemblage rapides et faciles, permettant un accès aisé à l'appareil protégé. Les parois de l'enveloppe présentent, pour une épaisseur de 10 à 15 millimètres, un pouvoir d'isolation thermique équivalent à celui d'une épaisseur d'environ 100 millimètres de fibres minérales.

Au cours d'un essai, un appareil protégé par l'enveloppe décrite a été porté alternativement à -20°C pendant 11 heures et à 0°C pendant 13 heures sur une durée totale de 72 heures, sans aucune formation compacte de glace. Au cours d'un autre essai, une fine pellicule de glace n'est apparue qu'après plus de 15 heures à -20°C.

Dans la description ci-dessus, il va de soi que l'élément supérieur et l'élément inférieur de l'enveloppe peuvent être échangés, et que l'enveloppe est utilisable quelle que soit l'orientation de la canalisation. De même, l'enveloppe peut être réalisée dans une forme adaptée à une canalisation non rectiligne ou à des canalisations multiples, avec le nombre d'ouvertures de passage appropriées.

## Revendications

1. Enveloppe pour la protection d'un appareil monté sur une canalisation, comprenant deux cuvettes (1, 2) en matériau thermiquement isolant, dont les bords sont munis de moyens d'assemblage mutuel (9, 12) permettant d'assembler les cuvettes pour former un logement fermé (3) pour l'appareil, caractérisée en ce que les cuvettes sont souples et présentent en des endroits appropriés des moyens de serrage autour de la canalisation constitués par des éléments de colliers complémentaires (15, 16).

2. Enveloppe selon la revendication 1, caractérisée en ce que les bords des cuvettes présentent des encoches (8) pour le passage de la canalisation.

3. Enveloppe selon la revendication 2, caractérisée en ce que les moyens d'assemblage s'étendent sur toute la longueur des bords des cuvettes à l'exception des encoches, et que les moyens de serrage s'étendent selon les bords des encoches.

4. Enveloppe selon l'une des revendications précédentes, caractérisée en ce que les moyens d'assemblage sont des bandes s'étendant chacune sur une fraction de la longueur du bord de la cuvette correspondante et coopérant entre elles pour assurer un assamblage continu sur leur longueur.

5. Enveloppe selon la revendication 4, caractérisée en ce que les bandes d'assemblage des deux cuvettes sont propres à être assemblées face contre face.

6. Enveloppe sleon l'une des revendications précédentes, caractérisée en ce que les moyens de serrage sont des bandes de serrage propres à être assemblées mutuellement face contre face pour former les colliers.

7. Enveloppe selon l'une des revendications 5 et 6, caractérisée en ce que les bandes d'assemblage et/ou les bandes de serrage sont propres à être alternativement assemblées par contact et désassemblées par arrachage.

8. Enveloppe selon l'une des revendications précédentes, caractérisée en ce que les parois des cuvettes comportent une multiplicité de couches isolantes superposées.

9. Enveloppe selon la revendication 8, caractérisée en ce que les couches isolantes sont recouvertes d'une toile imperméable.

10. Enveloppe selon l'une des revendications précédentes, caractérisée en ce que chaque cuvette est formée d'un fond (4) et d'une paroi latérale (5) assemblés entre eux par couture.

## Patentansprüche

1. Schutzhülle für ein auf einer Rohrleitung montiertes Gerät mit zwei Schalen (1, 2) aus einem thermisch isolierenden Material, deren Ränder mit gegenseitigen Verbindungsmitteln (9, 12), welche das Verbinden der Schalen erlauben, versehen sind, um ein geschlossenes Gehäuse für das Gerät zu bilden, dadurch gekennzeichnet, daß die Schalen flexibel sind und an geeigneten Stellen Anklemmittel um die Rohrleitung herum auweisen, die aus sich ergänzenden Ringelementen (15, 16) bestehen.

2. Schutzhülle nach Anspruch 1, dadurch gekennzeichnet, daß die Ränder der Schalen Ausnehmungen (8) für den Durchgang der Rohrleitung aufweisen.

3. Schutzhülle nach Anspruch 2, dadurch gekennzeichnet, daß die Verbindungsmittel sich über die ganze Länge der Ränder der Schalen, ausgenommen die Ausnehmungen, erstrecken und daß sich die Anklemmittel entlang der Ränder der Ausnehmungen erstrecken.

4. Schutzhülle nach einem der vorhergehenden Ansprüche, dadurch gekennzeichnet, daß die Verbindungsmittel Verbindungsleisten sind und sich jede Verbindungsleiste über einen Teil der Länge des Randes der jeweiligen Schale erstreckt, wobei die Verbindungsleisten untereinander zusammenarbeiten, um eine stetige Verbindung über ihre Länge zu gewährleisten.

5. Schutzhülle nach Anspruch 4, dadurch gekennzeichnet, daß die Verbindungsleisten der beiden Schalen Fläche gegen Fläche miteinander verbindbar sind.

6. Schutzhülle nach einem der vorhergehenden Ansprüche, dadurch gekennzeichnet, daß die Anklemmittel Klemmleisten sind, die zur gegenseitigen Verbindung Fläche gegen Fläche zwecks Bildung der Ringelemente ausgebildet sind.

7. Schutzhülle nach einem der Ansprüche 5 oder 6, dadurch gekennzeichnet, daß die Verbindungsleisten und/oder die Anklemmleisten dazu vorgesehen sind, abwechselnd durch Berührung miteinander verbunden und durch Auseinanderreißen getrennt zu werden.

8. Schutzhülle nach einem der vorhergehenden Ansprüche, dadurch gekennzeichnet, daß die Wände der Schalen eine Vielzahl von übereinanderliegenden, isolierenden Schichten aufweisen.

9. Schutzhülle nach Anspruch 8, dadurch gekennzeichnet, daß die isolierenden Schichten mit einem undurchlässigen Gewebe überzogen sind.

10. Schutzhülle nach einem der vorhergehenden Ansprüche, dadurch gekennzeichnet, daß jede Schale aus einem Boden (4) und einer Seitenwand (5) gebildet ist, welche durch Nähen miteinander verbunden sind.

## Claims

1. A protective box for apparatus mounted on piping, the box comprising two shells (1, 2) of thermally insulating material having their edges provided with mutual assembly means (9, 12) enabling the shells to be assembled together to form a closed housing (3) for the apparatus, the box being characterized in that the shells are flexible and have clamping means in appropriate locations for clamping around the piping, said clamping means being constituted by complementary collar elements (15, 16).

2. A box according to claim 1, characterized in that the edges of the shells have notches (8) through which the piping passes.

3. A box according to claim 2, characterized in that the assembly means extend around the entire length of the edges of the shells apart from the notches, and in that the clamping means extend along the edges of the notches.

4. A box according to any preceding claim, characterized in that the assembly means are strips each extending over a fraction of the length of the edge of the corresponding shell and co-operating with one another in order to provide continuous assembly along their length.

5. A box according to claim 4, characterized in that the assembly strips fo the two shells are suitable for being assembled face to face.

6. A box according to any preceding claim, characterized in that the clamping means are clamping strips suitable for being assembled together face to face in order to form the collars.

7. A box according to claim 5 or 6, characterized in that the assembly strips and/or the clamping strips are suitable for being in twin assembled together by contact and disassembled by being torn apart.

8. A box according to any preceding claim, characterized in that the walls of the shells include a multiplicity of superposed insulating layers.

9. A box according to claim 8, characterized in that the insulating layers are covered with waterproof cloth.

10. A box according to any preceding claim, characterized in that each shell is constituted by a bottom (4) and a side wall (5) which are assembled to each other by stitching.

FIG. 1

FIG. 2

FIG. 3